**Europäisches Patentamt**

**European Patent Office**

**Office européen des brevets**

(19)

(11) Veröffentlichungsnummer : **0 119 377**
**B1**

(12) **EUROPÄISCHE PATENTSCHRIFT**

(45) Veröffentlichungstag der Patentschrift :
19.10.88

(21) Anmeldenummer : 84100051.6

(22) Anmeldetag : 04.01.84

(51) Int. Cl.⁴ : **G 01 F 1/68**

(54) **Verfahren zum Messen des Luftdurchsatzes im Ansaugrohr einer Brennkraftmaschine.**

(30) Priorität : 11.02.83 DE 3304710

(43) Veröffentlichungstag der Anmeldung :
26.09.84 Patentblatt 84/39

(45) Bekanntmachung des Hinweises auf die Patenterteilung : 19.10.88 Patentblatt 88/42

(84) Benannte Vertragsstaaten :
DE FR GB

(56) Entgegenhaltungen :
EP-A- 0 044 873
DE-A- 3 203 986
US-A- 4 164 206
US-A- 4 184 458

(73) Patentinhaber : ROBERT BOSCH GMBH
Postfach 50
D-7000 Stuttgart 1 (DE)

(72) Erfinder : Hönig, Günter, Dipl.-Ing.
Haldenstrasse 88
D-7257 Ditzingen (DE)

EP 0 119 377 B1

## Beschreibung

### Stand der Technik

Die Erfindung geht aus von einem Verfahren zum Messen des Luftdurchsatzes im Ansaugrohr einer Brennkraftmaschine nach der Gattung des Hauptanspruchs. Bekannt ist aus der DE-PS 20 42 983 ein Konstanttemperature-Anemometer mit einem Hitzdraht. Derartige Hitzdraht-Luftmassenmesser arbeiten äußerst genau und sind zwischenzeitlich für die Serienfertigung vervollkommet. Hitzdrahtluftmassenmesser arbeiten nach dem Prinzip der massendurchsatzabhängigen Abkühlung des Hitzdrahtes. Problematisch ist der Einsatz dann, wenn die Strömungsrichtung umkehren kann, denn der Effekt der Hitzdrahtabkühlung ist unabhängig von der Strömungsrichtung, so daß der HLM den gesamten Massenfluß mißt, während für den Einsatz im Kraftfahrzeug lediglich der Luftmassenfluß in Richtung zur Brennkraftmaschine wesentlich ist.

Aus dem Dokument EP-A-0 044 873 ist ein Verfahren zur Messung des Luftdurchsatzes im Ansaugrohr einer Brennkraftmaschine mit einem richtungsunempfindlichen Strömungsmeßorgan bekannt, wobei die Art des Kurvenverlaufs beim Auftreten von Vor- und Rückströmung zum Bestimmen der Umkehrpunkte ausgewertet wird und wobei der Durchsatz während der Rückströmung vom Gesamtdurchsatz abgezogen wird. Hierbei wird allerdings davon ausgegangen, daß eine Rückströmung immer dann einsetzt, wenn der Kolben sich im Bereich des oberen Totpunktes befindet. Die Zeitdauer der Rückströmung soll darüber hinaus einen definierten, von vornherein einstellbaren Zusammenhang mit der Drehzahl der Brennkraftmaschine haben.

Weiter ist es aus dem Dokument US-A-4 184 458 bekannt, zum Bestimmen des Lastbereichs der Brennkraftmaschine ein Drucksignal, nämlich den Druck in dem Ansaugkanal der Brennkraftmaschine, zu verarbeiten.

### Vorteile der Erfindung

Das erfindungsgemäße Verfahren zum Messen des Luftdurchsatzes im Ansaugrohr einer Brennkraftmaschine hat gegenüber bekannten Verfahren und Einrichtungen den Vorteil einer zusätzlichen Stromrichtungerkennung, so daß sich mit Hilfe der Erfindung der Luftmassendurchsatz im Luftansaugrohr und zwar in Richtung zur Brennkraftmaschine äußerst exakt bestimmen läßt. Als Folge davon kann auch die Kraftstoffzumessung mit all ihren Vorteilen, z. B. sauberes Abgas und niedriger Benzinverbrauch, genau eingestellt werden.

Weitere Vorteile der Erfindung ergeben sich in Verbindung mit den Unteransprüchen aus der nachfolgenden Beschreibung von Ausführungsbeispielen.

### Zeichnung

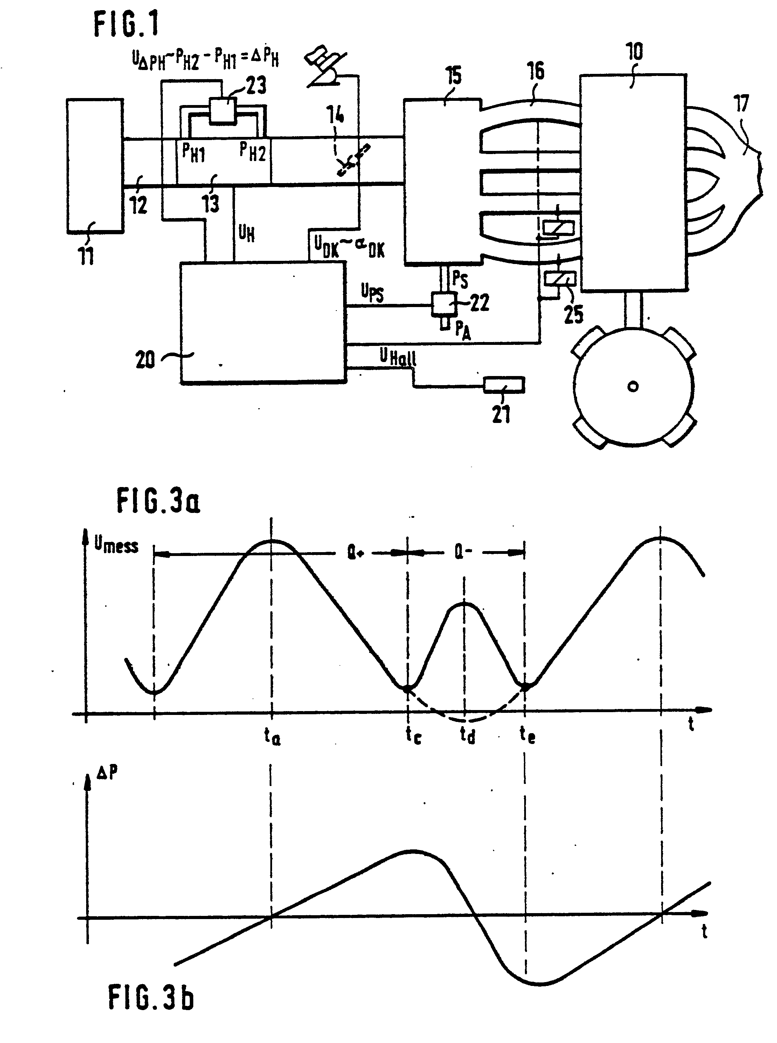

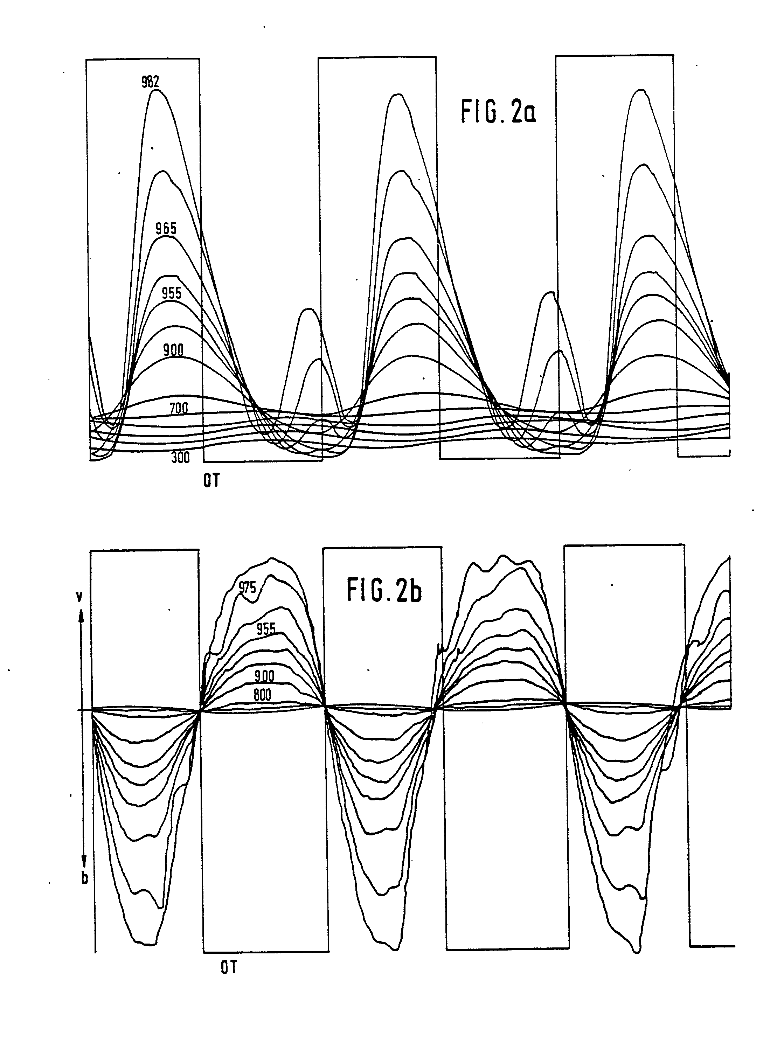

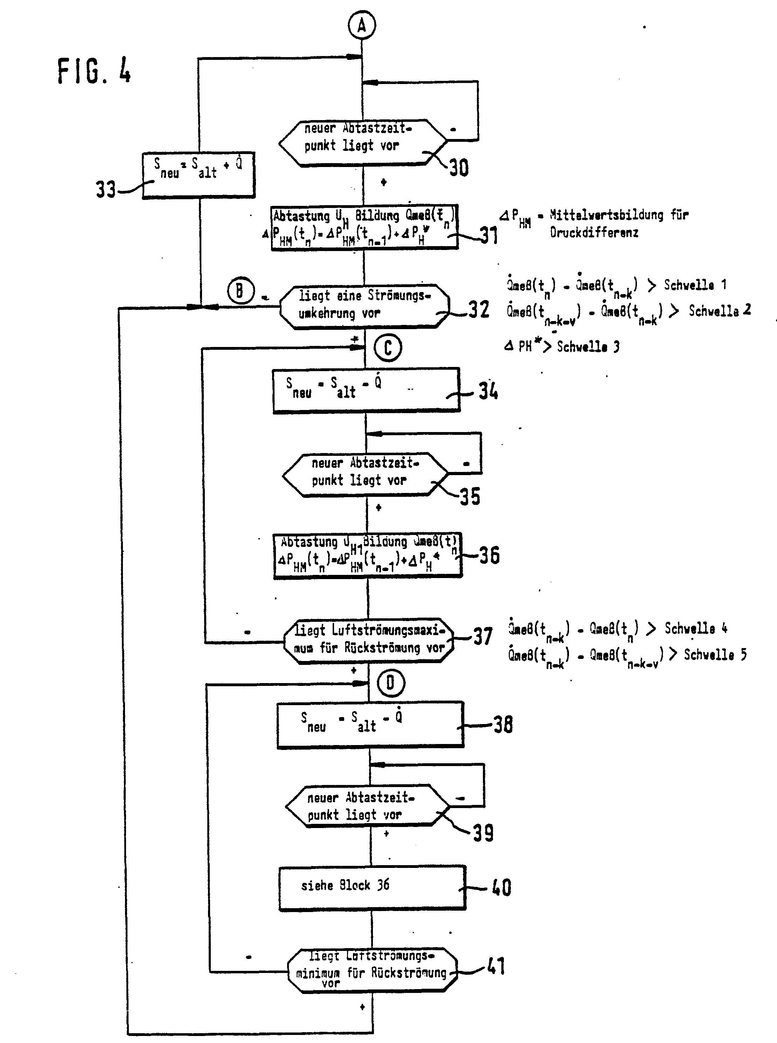

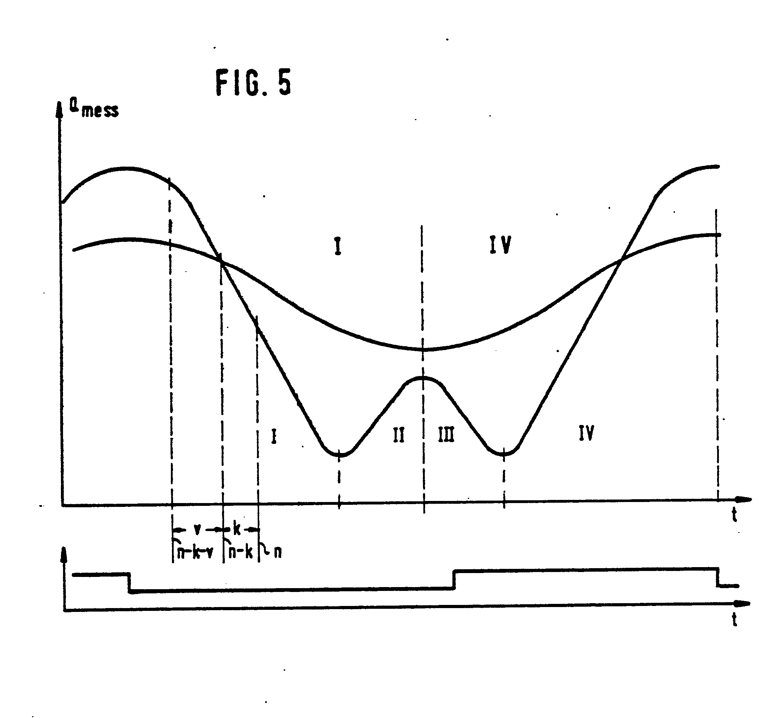

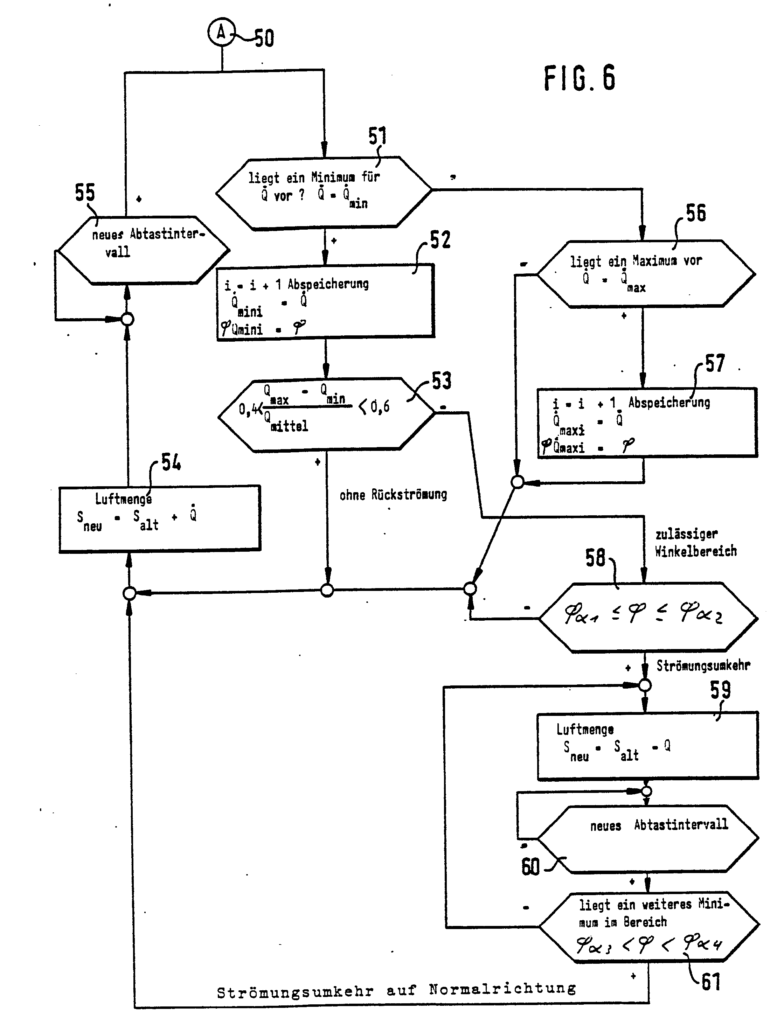

Ausführungsbeispiele der Erfindung sind in der Zeichnung dargestellt und werden im folgenden näher beschrieben und erläutert. Es zeigen Figur 1 ein Übersichtsschaubild einer Brennkraftmaschine mit Fremdzündung mit den Steuereinrichtungen für die Kraftstoffzumessung, Figur 2 Meßdiagramme bezüglich Luftdurchsatz und Druck über dem Hitzdrahtluftmassenmesser, Figur 3 eine vereinfachte Darstellung der in Figur 2 aufgezeichneten Zusammenhänge, Figur 4, ein Flußdiagramm zur rechnergesteuerten Realisierung des erfindungsgemäßen Verfahrens bei Drucksignalauswertung, Figur 5 eine Signaldarstellung zum Erläutern der Verhältnisse ohne Drucksignalauswertung nd Figur 6 ein Flußdiagramm zum Ermitteln des Luftdurchsatzes über das Auswerten der Lage von Minima und Maxima.

### Beschreibung der Ausführungsbeispiele

Figur 1 zeigt in grober Übersicht die wichtigsten Elemente einer Brennkraftmaschine mit Fremdzündung im Zusammenhang mit der Kraftstoffzumessung. Mit 10 ist die Brennkraftmaschine selbst bezeichnet. Luftströmungsmäßig vor der Brennkraftmaschine liegen hintereinander ein Luftfilter 11, ein Sammelsaugrohr 12 mit einem nicht näher dargestellten Hitzdrahtluftmassenmesser (HLM) 13, eine Drosselklappe 14, ein Sammler 15 sowie Schwingröhren 16, deren Anzahl sich an der Anzahl der Zylinder der Brennkraftmaschine orientiert. Abgasseitig befindet sich dann noch die Abgasleitung 17.

Mit 20 ist ein Rechnerblock bezeichnet, der eingangsseitige Drehzahlsignale von einem Drehzahlsensor 21, und ferner Signale vom HLM 13, Drucksignale von einem Sammlerdrucksensor 22, der auch als Differenzdrucksensor zum Außendruck realisiert sein kann, Signale bezüglich der Drosselklappenposition und ein Drucksignal bezüglich der Verhältnisse über dem HLM erhält. Der Rechnerblock 20 steuert seinerseits wieder bei dem speziellen Beispiel intermittierend ansteuerbare Einspritzventile 25 an den brennkraftmaschinenseitigen Enden der Schwingrohre 16.

Derzeit bekannte Systeme verarbeiten Drehzahl und Luftmassensignale für ein Grundeinspritzsignal, das dann gegebenenfalls temperaturabhängig und je nach Öffnungsgrad der Drosselklappe korrigiert wird.

Zur Bestimmung der Luftmenge pro Ansaughub dient folgende Gleichung

$$\dot{Q} = \int_0^T \dot{Q}\alpha t \quad \text{mit} \quad \dot{Q} = f(UH) \tag{1}$$

Der Luftfluß pulsiert gemäß den Ansaughüben, wobei die Drosselklappe 14 eine Entkopplung mit einer Dämpfung bewirkt.

Bei hohen Lastzuständen mit vollständig oder nahezu vollständig geöffneter Drosselklappe treten im Sammelsaugrohr 12 hohe Druckschwingungen auf, die starke Schwankungen in dem Luftfluß hervorrufen. Die Höhe der Druckschwingung hängt neben der Drosselklappenstellung zusätzlich von Reflexionen der Druckwelle an den geschlossenen Einlaßventilen der restlichen Zylinder in Verbindung mit Eigenresonanzen der einzelnen Schwingrohre 16 ab. Die Schwingungen breiten sich vom Einlaßventil beim Motor stromaufwärts zum HLM 13 im Sammelsaugrohr 12 mit Schallgeschwindigkeit aus und werden gemäß Gesetzen der Akustik am Luftfilter teilweise reflektiert. Die Druckschwingungen bewirken entsprechende Schwingungen im Luftfluß $\dot{Q}$ über die Beziehungen

$$\dot{Q} \sim -\frac{dp}{dx} = p' \tag{2a}$$

$$\ddot{Q} \sim -\frac{d^2p}{\alpha x} = p'' \tag{2b}$$

Die physikalischen Gegebenheiten der Entstehung und Ausbreitung der Druckwellen bewirken stetige Verläufe für die $p'$ und $p''$ und damit auch für $\dot{Q}$, $\ddot{Q}$ und für $\dot{Q}$.

Ist der Druckgradient über dem HLM 13 $< 0$ — Näherungsweise gilt dies auch für die Differenz vom Sammlerdruck $p_S$ zum Außendruck $p_A$ — wirkt eine Kraft in Richtung Luftfilter gegen den Luftfluß und verringert zunächst nur die Strömungsgeschwindigkeit. Eine Strömungsumkehr bei starker Pulsation entsteht, wenn das Integral

$$I = {}_{\alpha_1}^{\alpha_2}\int p' \, dt \tag{3}$$

einen vom maxialen Durchfluß abhängigen Wert überschreitet.

Der HLM 13 bildet innerhalb des Sammelsaugrohres 12 eine Engstelle mit bestimmter Geometrie. Für den Zusammenhang zwischen den Druckverhältnissen über dem HLM und der durchströmenden Luftmasse ergibt sich folgender formelmäßiger Zusammenhang:

$$\frac{dp}{dx} = \frac{d\dot{Q}}{dt} - \dot{Q}^2 \cdot K \tag{4}$$

Mißt man entsprechend Figur 1 zu beiden Seiten des HLMs die Druckwerte PH1 und PH2, so ergibt sich aufgrund der konstanten Differenz der Meßpunkte die Formel

$$\Delta pH_{21} = PH2 - PH1 \sim \frac{d\dot{Q}}{\alpha t} - \dot{Q}^2 \cdot K \tag{5}$$

Vernachlässigt man den statischen Therm, dann ergibt sich

$$\Delta pH21 \sim \frac{d\dot{Q}}{dt} \tag{6}$$

Figur 2 zeigt Meßprotokolle bei einem bestimmten Brennkraftmaschinentyp. Aufgetragen ist in Figur 2a der Luftfluß $\dot{Q}$ bei verschiedenen Lastzuständen, die in Form von Druckwerten bei einem gegebenen hohen Außendruck eingetragen sind. Die waagrechte Achse kennzeichnet den Kurbelwellenwinkel. Erkennbar ist bei niedrigen Lastzuständen eine relativ gleichmäßige Luftströmung, die bei höheren Lasten, d. h. höher werdenden Drücken im Sammler 15 eine zunehmende Welligkeit erhalten. Diese Welligkeit drückt sich bei mittleren Lasten in abwechselnd stärkeren und schwächeren Luftdurchsätzen im Saugrohr aus. Ab einem bestimmten Lastzustand bilden sich derart starke Schwingungen im Luftansaugrohr aus, daß die der normalen Strömungsrichtung entgegengesetzte Druckkraft derart hohe Wert aufweist, daß eine Strömungsrichtungsumkehr eintritt. Der HLM bekannter Bauart kann jedoch nicht zwischen den einzelnen Strömungsrichtungen unterscheiden, so daß er zu Zeiten dieser Rückströmung ebenfalls ein entsprechendes Strömungssignal signalisiert. Diese Rückströmung äußert sich in zwischen den Hauptmaxima der Strömung liegenden kleineren Maxima.

Aufgabe einer Auswerteschaltung für den HLM ist es nun, die der Brennkraftmaschine zuströmende

3

Luftmasse aus dem Gesamtluftmengenströmungssignal zu ermitteln, d. h., von den insgesamt gemessenen Luftdurchsatzwerten den Anteil der Rückströmung abzuziehen.

Voraussetzung hierfür ist die Kenntnis der Umkehrpunkte der Luftströmung.

Ein Vergleich der beiden Figuren 2a und 2b zeigt bei einer Strömung ohne Strömungsumkehr das Maximum und Minimum der Strömung im Bereich von Nulldurchgängen der $\Delta$ p-Werte. Tritt Rückströmung auf, dann liegen die Minima der Signalverläufe von Figur 2a bei Werten > 0 der Signalverläufe nach Figur 2b. Der Beginn der Rückströmung ist gekennzeichnet durch ein Minimum bei der Luftströmung und einem $\Delta p > 0$ nach der Skizze von Figur 2b. Entsprechend liegt das Ende der Rückströmung beim zweiten Minimum der Luftströmung und einem $\Delta p < 0$ und anderer Polarität. Je nach Art des Differenzdrucksignals kann die Polarität auch umgekehrt liegen. Eine Ausführung der Erfindung macht sich diese Gesetzmäßigkeit zunutze und ermittelt davon ausgehend die Strömungsumkehrpunkte und im folgenden dann den gesamten Luftfluß pro Ansaughub zur Brennkraftmaschine.

Das in Figur 2b aufgetragene Signal ist meßtechnisch ermittelt und stellt das Differenzdrucksignal über dem HLM entsprechend der Darstellung von Figur 1 dar. In angepaßter Form läßt sich auch der Differenzdruck zwischen Sammler und Außenluft für die Signalauswertung verwenden oder jedoch die Differenz des Drucks unmittelbar stromabwärts des HLM gegenüber dem Außendruck. Schließlich besteht die Möglichkeit den Druckverlauf nach Figur 2b auch rechnerisch zu bestimmen, wobei die einmalige Berechnung des Druckverlaufs bei relativ niedrigen Lasten ausreichen kann, um das Eintreten der obengenannten Gesetzmäßigkeiten nachvollziehen zu können.

Figur 3 zeigt noch einmal vereinfacht dargestellt die in Figur 2 meßtechnisch ermittelten Zusammenhänge. Demzufolge ist in Figur 3a der Luftmassendurchsatz in einem hohen Lastbereich mit Rückströmung dargestellt und Figur 3b zeigt die entsprechenden Differenzdruckverhältnisse.

Wesentlich erscheint auch, daß an die Genauigkeit des Drucksensors keine hohen Anforderungen gestellt werden müssen, da nur der obere Lastbereich in diesem Zusammenhang wichtig ist und dort auch nur die dynamischen Verhältnisse von Interesse sind. Die Grundgenauigkeit für das Lastsignal liefert der HLM.

Rechnernisch ergeben sich kurz zusammengefast folgende Verhältnisse :

Ohne Rückströmung :

a) ein Maximum für den Luftfluß liegt vor bei

$$\ddot{Q} = 0, \quad p' \approx 0, \quad \frac{dp}{dt} > 0 \tag{7}$$

b) ein Minimum für den Luftfluß liegt vor bei

$$\ddot{Q} = 0, \quad p' = 0, \quad \frac{dp}{dt} < 0 \quad \text{und} \quad \ddot{Q} \text{ (Krümmung)} < 0 \tag{8}$$

Mit Rückströmung ergeben sich die Zusammenhänge :

c) erster Umkehrpunkt zum Zeitpunkt tc, Übergang auf Rückströmung

$$\dot{Q} = 0, \quad \ddot{Q} < 0, \quad p' > 0 \tag{9}$$

d) Maximum für den Rückfluß

$$\dot{Q} = 0, \quad \ddot{Q} > 0, \quad p' \approx 0 \tag{10}$$

e) zweiter Umkehrpunkt zur Zeit te, Übergang auf Normalströmung

$$\dot{Q} = 0, \quad \ddot{Q} < 0, \quad p' < 0$$

Im Bereich zwischen den Zeitpunkten tc und te liegt Rückströmung vor, so daß für den gesamten Luftfluß pro Ansaughub zur Brennkraftmaschine gilt

$$Q = Q_+ - Q_-$$

in der praktischen Ausführung der Durchflußmengenbestimmung geht man zweickmäßigerweise in folgenden Schritten vor :

1. Festlegung des möglichen Rückströmbereiches bezogen auf eine feste Referenzmarke aus Last und Drehzahl.

2. Abtastung der Ausgangssignals des HLMs mit Linearisierung sowie des Drucksignals im winkel- oder zeitsynchronen Raster

3. Summation der einzelnen Luftflußingremente für $Q_+$ bzw. $Q_-$.

4. Erkennung der Umkehrpunkte für die Strömung aus den oben geschilderten Verhältnissen zwischen Luftdurchsatz und Differenzdruck.

5. Bildung der Gesamtsumme $Q = Q_+ - Q_-$.

Realisiert wird die oben beschriebene Ausführung der Erfindung zweckmäßigerweise mittels eines Rechners, der nach einem in Figur 4 näher dargestellten Flußdiagramm programmiert ist.

A markiert den Beginn im Ablaufschema des Flußdiagramms von Figur 4. Es folgt eine Abtastpunktabfrage dahingehend, ob ein neuer Abtastzeit- oder -winkelpunkt vorliegt (30). Im Block 31 wird das HLM-Signal UH abgetastet und über eine Linearisierung ein Signal $\dot{Q}_{meß}(tn)$ ausgelesen. Außerdem wird der Differenzdruck $\Delta PH^*$ abgetastet und das Signal gefiltert, z. B. nach der Formel

$$\Delta PHM(tn) = \Delta PHM(tn - 1) + \Delta PH^* \tag{12}$$

Dies entspricht einer Mittelwertbildung für die Druckdifferenz.

Die nachfolgende Abfrageeinheit 32 ermittelt, ob eine Steigungsumkehr für $\dot{Q}$ vorliegt ($\dot{Q} < 0$ nach $\dot{Q} > 0$) gemäß den drei Bedingungen

$$- Q^*_{meß}(tn) - Q^*_{meß}(tn - K) > \text{Schwelle 1} \tag{13}$$

$$- Q^*_{meß}(tn - K - V) - Q_{meß}(tn - K) > \text{Schwelle 2}$$

$$- \Delta PH^* \text{ gefiltert} > \text{Schwelle 3}$$

Liegt keine Steigungsumkehr vor, dann wird in Block 33 eine neue Summe für den Luftfluß gebildet :

$$\text{Luftfluß } S(tn) = \text{Luftfluß } S(tn - 1) + \dot{Q}_{meß}^*(tn) \text{ mit } n = n + 1 \tag{14}$$

als neuer Zuordnung.

Liegt eine Strömungsumkehr (c) vor, dann erfolgt in Block 34 eine Subtraktion des neuesten Luftdurchsatzwertes ($S(tn) = S(tn - 1) - \dot{Q}_{meß}^*(tn)$) gegenüber der Addition in Block 33. Es schließt sich eine neue Abtastpunktabfrage 35 an. Im folgenden Block 36 ermittelt man wieder $\dot{Q}_{meß}(tn)$ mit nachfolgender Filterung $\dot{Q}_{meß}^*(tn)$, zusätzlich wird der Differenzdruck $\Delta PH$ abgefragt und ebenfalls gefiltert nach Formel 12. Die folgende Abfrageeinheit 37 dient dazu, ein Luftströmungsmaximum für die Rückströmung festzustellen. Dies geschieht mit den Gleichungen

$$\dot{Q}_{meß}^*(tn - K) - \dot{Q}_{meß}^*(tn) > \text{Schwelle 4} \tag{15}$$

$$\dot{Q}_{meß}^*(tn - K) - Q_{meß}^*(tn - K - V) > \text{Schwelle 5}$$

Ist dieses Strömungsmaximum noch nicht gegeben, beginnt der Ablauf erneut bei C. Ansonsten wird in Block 38 ein neuer Luftmassengesamtwert gebildet :

$$\text{Luftfluß } S(tn) = \text{Luftfluß } S(tn - 1) - \dot{Q}_{meß}^*(tn) \tag{16}$$

mit der neuen Zuordnung $n = n + 1$.

Im Anschluß an eine neue Abtastpunktabfrage 39 folgt wiederum eine Abtastung des Luftmassenwertes mit seiner Filterung sowie die Abtastung des Differenzdruckwertes, der sich ebenfalls eine Filterung nach der Formel

$$\Delta PHM(tn) = \Delta PHM(n - 1) + \Delta PH^* \tag{17}$$

folgt.

In der Abfrageeinheit 41 wird schließlich eine neuerlicher Steigungsumkehr festgestellt entsprechend den Formeln

$$\dot{Q}_{meß}^*(tn) - \dot{Q}_{meß}^*(tn - K) > \text{Schwelle 6} \tag{18}$$

$$\dot{Q}_{meß}^*(tn - K - V) - \dot{Q}_{meß}^*(tn - K) > \text{Schwelle 7}$$

Liegt die Rückströmung immer noch vor, dann erfolgt ein Rücksprung nach D, ansonsten ein Rücksprung nach B.

Die in Verbindung mit den Blöcken 32, 37 und 41 genannten Schwellwerte sind vorzugsweise Funktionen von Betriebskenngrößen bzw. eines Druckmittelwertes, der sich aus einer vorzeichenrichtigten Summation der einzelnen Druckinkremente $\Delta$ PHM über einen Ansaughub mit Division durch die Anzahl der Ingremente ergibt. Die Abtastzeit läßt sich adaptiv anpassen abhängig von der Krümmung der Q-Kurve, um eine bessere Erkennung der Umkehrpunkte zu erhalten.

Die oben beschriebenen Verfahren zum Erkennen der Umkehrpunkte der Luftströmung im Ansaugrohr setzen ein Drucksignal voraus, das entweder unmittelbar gemessen, oder mittelbar berechnet wird. Es ist jedoch auch möglich, die Umkehrpunkte unmittelbar aus dem Signalverlauf des Luftmassendurchsatzes zu gewinnen. Dies wird zweckmäßigerweise anhand des in Figur 5 dargestellten Signalverlaufs erläutert.

Wie bereits im Zusammenhang mit den Figuren 2 und 3 erklärt, liegt ein Minimum der Luftströmung ohne Pulsation an der Stelle eines — wenn auch verringerten — Maximums der Luftströmung beim Auftreten von Pulsation (M). Im Falle der Pulsation liegen dann je ein Minimum an Luftströmung zu beiden Seiten dieses mittleren Maximums.

Eine weitere Ausführungsform der Erfindung zielt nun darauf ab, das Minimum der Strömung ohne Pulsation zu markieren. Im Falle der Pulsation tritt dann an diese Stelle ein Maximum und das signalmäßige erste Minimum liegt vor diesem markierten Punkt, der vorteilhafterweise einem Kurbelwellenwinkel entspricht. Das Auftreten von Pulsation wird dann dadurch festgestellt, daß das ursprüngliche Minimum zu einem Maximum wird und die Umkehrpunkte ergeben sich als die benachbarten Minima der Luftströmung. Dabei kommt beim Wechsel von normaler Strömung zu Pulsation im Punkt M das Merkmal hinzu, daß der Betrag der Krümmung im Falle einer Pulsation wesentlich größer ist, d. h. der Krümmungsradius kleiner.

Es werden Lage und Größe der Minima und Maxima innerhalb einer Erfassungsperiode abgespeichert. Im Bereich mittlerer Lasten bewirkt die Dämpfung durch die Drosselklappe nur jeweils ein Minimum und ein Maximum gemäß der Grundwelle des Ansaugsystems :

Bereich :

$$Q_{max} - Q_{min} \approx C1 \cdot Q_{mittel} \text{ mit } C1 = 0{,}4 - 0{,}6$$

$$Q_{mittel} = \text{Mittelwert des Luftflusses}$$

Diese Extremwerte verschieben sich mit zunehmenden Lasten und abnehmender Dämpfung gemäß den Gleichungen für Resonanzkreise nach früh. Diese Änderungen lassen sich berücksichtigen über

a) Drosselklappen-Drehzahl-Kennfeld
b) Hochrechnung aus Verschiebung im Bereich mittlerer Lasten auf den Bereich hoher Lasten

Befindet sich bei hohen Lasten ein Minimum vor dem zu erwartenden Minimum bei mittleren Lasten mit Hochrechnung auf hohe Lasten, liegt ein Strömungsumkehrpunkt vor. Dieses Minimum muß dabei innerhalb gewisser Grenzen bezogen auf OT

$$\varphi_{\alpha_1} \leq \varphi - \varphi_{\alpha_2} < \varphi Q_{min} \quad \text{(ohne Rückströmung)}$$

liegen. Ein entsprechender Umkehrbereich von Rückströmung auf Normalströmung befindet sich bei

$$\varphi Q_{min} \text{ (ohne Rückströmung)} < \varphi_{\alpha_3} \leq \varphi \leq \varphi_{\alpha_4}$$

Figur 6 zeigt ein Flußdiagramm zur rechnergesteuerten Realisierung der oben beschriebenen Möglichkeit zum Bestimmen der Umkehrpunkte sowie des Luftmassendurchsatzes. Das Flußdiagramm beginnt bei einem Initialisierungspunkt A (50). Es folgt eine Minimalwertabfrage 51. Liegt ein Minimum vor, dann werden momentaner Luftdurchsatz und der Winkel dieses Minimums abgespeichert sowie im Abtastintervall weitergegangen (52). Es folgt eine Abfrage auf einen mittleren Lastbereich (53), mit der aus Störungsgründen auftretende Minima erfaßt und auswertungsmäßig unterdrückt werden können. Die Abfrage erfolgt nach der Formel

$$0{,}4 < (\dot{Q}_{max} - \dot{Q}_{min})/\dot{Q}_{mittel} < 0{,}6$$

Ist dieser Bereich erfüllt, dann erfolgt in Block 54 eine Addition der Luftmenge entsprechend der Formel

$$S_{neu} = S_{alt} + Q$$

Im folgenden wird daraufhin das Abtastintervall im Block 55 abgefragt und im Falle des Vorliegens eines neuen Intervalls zum Ausgangspunkt 50 bzw. zur Abfrageeinheit 51 zurückgegangen.

Liegt kein Minimum für $\dot{Q}$ vor, dann kommt der von der Abfrageeinheit 51 nach rechts gehende Zweig zum Tragen. Im folgenden wird in Block 56 auf ein Maximum abgefragt. Liegt keines vor, dann kommt Block 54 zum Tragen. Im anderen Falle werden Luftdurchsatz und Winkelwerte in einem Block 57 abgespeichert und außerdem das Abtrastintervall erhöht. Anschließend wird in Block 54 erneut der Luftmassendurchsatzwert addiert.

Erkennt die Abfrageeinheit 53 auf ein Minimum außerhalb des mittleren Rastbereiches, wird in einem nachfolgenden Block 58 noch auf einen zulässigen Winkelbereich abgefragt (obere Lastbereichsunterscheidung). Bei Nein kommt wieder Block 54 zum Tragen, bei JA wird auf Strömungsumkehr geschlossen und als Folge davon in einem weiteren Block 59 die neue Luftmenge berechnet, diesmal jedoch auf Grund der Strömungsumkehr nach Formel

$$S_{neu} = S_{alt} - Q$$

Es schließt sich eine Abfrage des Abtastintervalls 60 an und nachfolgend eine Abfrage auf ein weiteres Minimum in einem zulässigen Winkelbereich (61). Solange dies nicht der Fall ist, wird auf Rückströmung erkannt und fortlaufend Block 59 sowie Block 60 durchlaufen. Im anderen Fall, d. h. beim Auftreten eines richtig liegenden zweiten Minimums, wird eine erneute Strömungsumkehrung erkannt, was wiederum als Rückkehr in die normale Strömung zu interpretieren ist. In dieser Situation wirkt dann wieder Block 54.

Mit den nach Figur 6 dargestellten Flußdiagramm ist es somit möglich, Umkehrpunkte in der Strömungsrichtung zu erkennen und daraus die für die Berechnung der in einer Richtung fließenden Durchsatzmenge erforderlichen Schlüsse zu ziehen.

Eine weitere Möglichkeit zum Bestimmen der Pulsation sowie der Umkehrpunkte ergibt sich über die Auswertung des Luftmengengradienten. Ohne Rückströmung verlaufen die Tangenten des Luftströmungssignals wesentlich flacher als beim Auftreten von Rückströmung. Dies bedeutet ein Feststellen der Rückströmung überhaupt über eine gewisse Schwelle beim Druckgradient und schließlich kann ein Strömungsrichtungsumkehrpunkt zumindest näherungsweise über den Schnittpunkt einer Tangente an den Luftströmungssignalverlauf mit einem definierten Spannungswert ermittelt werden.

Das Ablaufdiagramm ist nahezu identisch mit dem von Figur 4.

In Block 31 erfolgt eine Filterung von Q̇ gemäß den Strömungs- und Pulsationsbedingungen im Ansaugteil. Hierbei sind vorliegende Resonanzbedingungen besonders zu berücksichtigen. Die Filterung liefert ein äquivalentes Drucksignal.

Zur weiteren Erläuterung der vorgeschlagenen Signalverarbeitung sind in Figur 5 noch verschiedene Abtastpunkte und Abtastpunktbereiche eingetragen. Diese Abtastpunkte sind entweder zeit- oder winkelsynchron, wobei sie zusätzlich im Bereich größerer Krümmung enger liegend gewählt werden können, da nur in diesen Bereichen, d. h. außerhalb des normalen Maximums der Luftströmung, die Signalfassung bezüglich dem Erkennen von Umkehrpunkten wichtig ist. Selbstverständlich hängt die Genauigkeit der Luftdurchsatzmessung sowie die Bestimmung des Luftdurchsatzes pro Ansaughub auch mit der Feinheit der Abtastung zusammen.

Abzufragende Schwellwerte bei der Signalverarbeitung im Zusammenhang mit der Rückströmungserfassung sind zweckmäßigerweise abhängig von wenigstens einer der Größen Drehzahl und Last.

Zur Bestimmung der Luftmenge pro Hub wird das Ausgangssignal des Hitzdraht- oder Heißfilmluftmassenmessers zeit- bzw. winkeläquidistant abgetastet und über eine Entzerrungskurve in ein Luftflußinkrement umgewandelt. Die einzelnen Inkremente $Q_n$ werden entsprechend der Strömungsrichtung in einem Register aufsummiert. Zur Verringerung des Fehlers erfolgt die Summation mittels Trapez- oder Simpson-Gleichung.

Die Summation erfolgt fortlaufend ohne Anfangs- und Endpunkt. Die Ansaugluftmenge pro Hub für den Bereich $t_0$ bis $t1 = t_0 + Tn$ (dies entspricht einer Periode im Luftmassensignal) bestimmt man über eine Substraktion S (t1) minus S ($t_0$). Für den Filteralgorythmus benötigt man k benachbarte Abtastwerte für den Luftfluß z. B. von $Q_{n-k}$ bis $Q_n$, was bei dieser Darstellung unter Verwendung von Schieberegistern einfach möglich ist. Da der Wert der jeweiligen Gesamtsumme S unabhängig von der Strömungsrichtung bei jedem Referenzpunkt immer positiv ist, ergibt sich eine sehr einfache Auswertung.

Es hat sich gezeigt, daß mit der vorstehend beschriebenen Erfindung der Luftmassendurchsatz zu einem Kraftfahrzeug äußerst exakt ermittelt und damit die Brennkraftmaschine hinsichtlich Leistung und sauberem Abgas im Optimum betrieben werden kann.

**Patentansprüche**

1. Verfahren zur Messung des Luftdurchsatzes im Ansaugrohr (12) einer Brennkraftmaschine, in dem eine Vor- und eine Rückströmung auftritt, mit einem richtungsunempfindlichen Strömungsmeßorgan (13), insbesondere Hitzdraht oder Heißfilm, wobei dem daraus bestimmten Gesamtdurchsatz (Q̇) der Durchsatz während der Rückströmung abgezogen wird, dadurch gekennzeichnet, daß die die Umkehrung zwischen Vor- und Rückströmung kennzeichnenden Umkehrpunkte ($t_c$, $t_e$) des Luftdurchsatzkurvenverlaufs anhand

a) der Lage der Maxima ($t_a$, $t_d$) und Minima ($t_c$, $t_e$) des Luftdurchsatzkurvenverlaufs (Q̇ = f(t)) und

b) eines entweder als Differenzdruck ($\Delta$ PH) über dem Strömungsmeßorgan (13) oder als Differenzdruck ($P_S$-$P_A$) zwischen einem Punkt stromabwärts des Strömungsmeßorgans und der Außenluft ermittelten Differenzdrucksignales ($\Delta$ P), derart bestimmt werden, daß

der auf den Beginn der Rückströmung hinweisende Umkehrpunkt ($t_c$) bei einem Minimum von $\dot{Q}$ und $\Delta$ P $\neq$ 0 erreicht wird

der auf das darauffolgende Ende der Rückströmung hinweisende Umkehrpunkt ($t_e$) bei einem Minimum von $\dot{Q}$ und $\Delta$ P $\neq$ 0, erreicht wird, jedoch mit einem $\Delta$ P mit gegenüber dem voranggegangenen Umkehrpunkt ($t_c$) geändertem Vorzeichen des Differenzdruckes.

2. Verfahren nach Anspruch 1, dadurch gekennzeichnet, daß das Differenzdrucksignal bestimmt wird nach der Näherungsformel dp/dx = d$\dot{Q}$/dt, wobei dp/dx die ortsabhängige Druckänderung und d$\dot{Q}$/dt die zeitabhängige Luftflußänderung ist und $\dot{Q}$ der Luftfluß.

3. Verfahren zur Messung des Luftdurchsatzes im Ansaugrohr (12) einer Brennkraftmaschine, in dem eine Vor- und eine Rückströmung auftritt, mit einem richtungsunempfindlichen Strömungsmeßorgan (13), insbesondere Hitzdraht oder Heißfilm, wobei dem daraus bestimmten Gesamtdurchsatz der Durchsatz während der Rückströmung abgezogen wird, dadurch gekennzeichnet, daß

während einer bis zu einem bestimmten Lastzustand als rückströmungsfrei betrachteten Strömung ein Minimum des Luftdurchsatzes bestimmt wird und zeit- oder winkelbezogen definiert bzw. abgespeichert wird ;

das Auftreten einer Rückströmung über die Umkehrung dieses Minimums in ein durch folgende Verhältnisse gekennzeichnetes Maximum : $\ddot{Q}$ = 0, $\ddot{Q}$ > 0, $\Delta$ P $\neq$ 0 ermittelt wird, wobei $\dot{Q}$ die erste Ableitung nach der Zeit, $\ddot{Q}$ die zweite Ableitung nach der Zeit des Luftdurchsatzes und $\Delta$ P ein entweder als Differenzdruck ($\Delta$ PH) über dem Strömungsmeßorgan (13), oder als Differenzdruck ($P_S$—$P_A$) zwischen einem Punkt stromabwärts des Strömungsmeßorgans und der Außenluft ermittelt ist ;

das davorliegende bzw. das danachfolgende Minimum des Luftdurchsatzes sich als Beginn bzw. Ende der Rückströmung bestimmende Umkehrpunkte ergeben.


**Claims**

1. Process for measuring the air throughput in the intake pipe (12) of an internal combustion engine, in which a forward and a reverse flow occurs, with a directionally insensitive flow measuring element (13), especially hot wire or hot film, the throughput during the reverse flow being deducted from the total throughput ($\dot{Q}$) determined therefrom, characterized in that the points of reversal ($t_c$, $t_e$) on the air throughput curve which characterize the reversal between forward and reverse flow are determined from

a) the location of the maxima ($t_a$, $t_d$) and minima ($t_c$, $t_e$) of the air throughput curve ($\dot{Q}$ = f(t)) and

b) a differential pressure signal ($\Delta$P) determined either as differential pressure ($\Delta$PH) across the flow measuring element (13) or as differential pressure ($P_S$-$P_A$) between a point downstream of the flow measuring element and the external air, in such a way that

— the point of reversal ($t_c$) indicating the start of the reverse flow is reached at a minimum of $\dot{Q}$ and $\Delta$P $\neq$ 0

— the point of reversal ($t_e$) indicating the subsequent cessation of the reverse flow is reached at a minimum of $\dot{Q}$ and $\Delta$P $\neq$ 0, but with a $\Delta$P for which the algebraic sign of the differential pressure differs from that for the preceding point of reversal ($t_c$).

2. Process according to Claim 1, characterized in that the differential pressure signal is determined in accordance with the approximate formula dp/dx = d$\dot{Q}$/dt, dp/dx being the pressure change which is dependent on location and d$\dot{Q}$/dt being the change in air flow which is dependent on time and $\dot{Q}$ the air flow.

3. Process for measuring the air throughput in the intake pipe (12) of an internal combustion engine, in which a forward and a reverse flow occurs, with a directionally insensitive flow measuring element (13), especially hot wire or hot film, the throughput during the reverse flow being deducted from the total throughput determined therefrom, characterized in that

— during a flow, which up to a specific load condition is regarded as being free of reverse flow, a minimum of the air throughput is determined and defined or stored with reference to time or angle ;

— the occurrence of a reverse flow is determined from the conversion of this minimum into a maximum characterized by the following relationships : $\ddot{Q}$ = 0, $\ddot{Q}$ > 0, $\Delta$P $\approx$ 0, $\dot{Q}$ being the first time derivative, $\ddot{Q}$ the second time derivative of the air throughput, and $\Delta$P is determined either as differential pressure ($\Delta$PH) via the flow measuring element (13), or as differential pressure ($P_S$ — $P_A$) between a point downstream of the flow measuring element and the external air ;

— the preceding or following minimum of the air throughput occur as points of reversal determining the start or end of the reverse flow.


**Revendications**

1. Procédé pour mesurer le débit d'air dans la tubulure d'aspiration (12) d'un moteur à combustion

interne, tubulure dans laquelle se produit un écoulement de l'air vers l'avant et vers l'arrière, avec un organe de mesure (13) de l'écoulement, sensible au sens de cet écoulement, notamment un fil chaud ou un film chaud, procédé dans lequel, du débit total ($\dot{Q}$) déterminé à partir de cet organe, est soustrait le débit pendant l'écoulement de l'air vers l'arrière, procédé caractérisé en ce que les points d'inversion ($t_c$, $t_e$) du tracé des courbes de débit d'air, caractérisant l'inversion entre l'écoulement vers l'avant et l'écoulement vers l'arrière, sont déterminés à l'aide :

a) de la position des maxima ($t_a$, $t_d$) et des minima ($t_c$, $t_e$) du tracé des courbes de débit d'air ($\dot{Q} = f(t)$).

b) un signal de pression différentielle ($\Delta P$), déterminé soit sous la forme de la pression différentielle ($\Delta PH$) sur l'organe de mesure (13) de l'écoulement, soit sous la forme de la pression différentielle ($P_S - P_A$) entre un point en aval de l'organe de mesure de l'écoulement et l'air extérieur, de façon que :

— le point d'inversion ($t_c$) se référant au début de l'écoulement vers l'arrière soit atteint pour un minimum de $\dot{Q}$ et de $\Delta P \neq 0$,

— le point d'inversion ($t_e$) se référant à la fin, venant à la suite, de l'écoulement vers l'arrière, soit atteint pour un minimum de $\dot{Q}$ et de $\Delta P = 0$, toutefois avec un signe de la pression différentielle $\Delta P$ modifié par rapport au point d'inversion précédent ($t_c$).

2. Procédé selon la revendication 1, caractérisé en ce que le signal de pression différentielle est déterminé selon la formule d'approximation $dp/dx = d\dot{Q}/dt$, $dp/dx$ étant la modification de pression dépendant de l'emplacement et $d\dot{Q}/dt$ la modification du flux d'air dépendant du temps, tandis que $\dot{Q}$ est le flux d'air.

3. Procédé pour mesurer le débit d'air dans la tubulure (12) d'aspiration d'un moteur à combustion interne, tubulure dans laquelle se produit un écoulement de l'air vers l'avant et un écoulement de l'air vers l'arrière, avec un organe de mesure (13) de l'écoulement, sensible au sens de cet écoulement, notamment un fil chaud ou un film chaud; procédé dans lequel du débit total déterminé à partir de cet organe, est soustrait le débit pendant l'écoulement de l'air vers l'arrière, procédé caractérisé en ce que :

— pendant un écoulement considéré, jusqu'à un état de charge déterminé, comme exempt d'un écoulement vers l'arrière, un minimum du débit d'air est déterminé et est défini au mémorisé en référence au temps ou à un angle,

— l'apparition d'un écoulement vers l'arrière est déterminée par l'inversion de ce minimum en un maximum caractérisé par les conditions suivantes : $\dot{Q} = 0$, $\ddot{Q} > 0$, $\Delta P \neq 0$, $\dot{Q}$ étant la première dérivée du débit d'air en fonction du temps, $\ddot{Q}$ la seconde dérivée du débit d'air en fonction du temps, et $\Delta P$ étant un signal de pression différentielle déterminé, soit sous la forme de la pression différentielle ($\Delta PH$) sur l'organe de mesure (13) de l'écoulement, soit sous la forme de la pression différentielle ($P_S - P_A$) entre un point situé en aval de l'organe de mesure de l'écoulement et l'air extérieur,

— le minimum précédent du débit d'air ou le minimum suivant du débit d'air correspondent aux points d'inversion déterminant le début ou la fin de l'écoulement vers l'arrière.

# FIG.1

$U_{\Delta PH} \sim P_{H2} - P_{H1} = \Delta P_H$

$P_{H1}$  $P_{H2}$

23

14

12

13

$U_H$

$U_{DK} \sim \alpha_{DK}$

11

20

15

16

10

17

$U_{PS}$

$P_S$

22

$P_A$

25

$U_{Hall}$

21

# FIG.3a

$U_{mess}$

$Q+$  $Q-$

$t_a$  $t_c$  $t_d$  $t_e$  $t$

$\Delta P$

$t$

# FIG.3b

1

FIG.2a

FIG.2b

# FIG. 4

(A)

neuer Abtastzeitpunkt liegt vor — 30

$S_{neu} = S_{alt} + \dot{Q}$ — 33

Abtastung $U_H$ Bildung $\dot{Q}meß(t_n)$
$\Delta P_{HM}(t_n) = \Delta P_{HM}^H(t_{n-1}) + \Delta P_H^*$ — 31

$\Delta P_{HM}$ = Mittelwertsbildung für Druckdifferenz

(B) liegt eine Strömungsumkehrung vor — 32

$\dot{Q}meß(t_n) - \dot{Q}meß(t_{n-k}) >$ Schwelle 1

$\dot{Q}meß(t_{n-k-v}) - \dot{Q}meß(t_{n-k}) >$ Schwelle 2

$\Delta PH^* >$ Schwelle 3

(C)

$S_{neu} = S_{alt} - \dot{Q}$ — 34

neuer Abtastzeitpunkt liegt vor — 35

Abtastung $U_H$ Bildung $\dot{Q}meß(t_n)$
$\Delta P_{HM}(t_n) = \Delta P_{HM}^{H1}(t_{n-1}) + \Delta P_H^*$ — 36

liegt Luftströmungsmaximum für Rückströmung vor — 37

$\dot{Q}meß(t_{n-k}) - \dot{Q}meß(t_n) >$ Schwelle 4

$\dot{Q}meß(t_{n-k}) - \dot{Q}meß(t_{n-k-v}) >$ Schwelle 5

(D)

$S_{neu} = S_{alt} - \dot{Q}$ — 38

neuer Abtastzeitpunkt liegt vor — 39

siehe Block 36 — 40

liegt Luftströmungsminimum für Rückströmung
vor — 41

3

FIG. 5

FIG. 6

(A) —50

51 liegt ein Minimum für $\dot{Q}$ vor ? $\dot{Q} = \dot{Q}_{min}$

55 neues Abtastintervall

52 $i = i + 1$ Abspeicherung
$\dot{Q}_{mini} = \dot{Q}$
$\varphi_{Qmini} = \varphi$

53 $0,4 < \dfrac{Q_{max} - Q_{min}}{Q_{mittel}} < 0,6$

ohne Rückströmung

54 Luftmenge
$S_{neu} = S_{alt} + \dot{Q}$

56 liegt ein Maximum vor
$\dot{Q} = \dot{Q}_{max}$

57 $i = i + 1$ Abspeicherung
$\dot{Q}_{maxi} = \dot{Q}$
$\varphi_{Qmaxi} = \varphi$

zulässiger Winkelbereich

58 $\varphi_{\alpha_1} \leq \varphi \leq \varphi_{\alpha_2}$

Strömungsumkehr

59 Luftmenge
$S_{neu} = S_{alt} - Q$

60 neues Abtastintervall

61 liegt ein weiteres Minimum im Bereich
$\varphi_{\alpha_3} < \varphi < \varphi_{\alpha_4}$

Strömungsumkehr auf Normalrichtung